# FASCICULE DE BREVET EUROPEEN

(11) **EP 1 283 237 B1**
(45) Date de publication et mention de la délivrance du brevet: **25.05.2005**
(21) Numéro de dépôt: 02291950.0
(22) Date de dépôt: 01.08.2002
(51) Int. Cl.: C08K 3/00, C08K 3/22, C08K 3/26, C08K 13/06

(54) **Composition à haute résistance à la propagation du feu**
Hochflammwidrige Zusammensetzung
Highly flame retardant composition

(30) Priorité: 07.08.2001 FR 0110778
(43) Date de publication de la demande: 12.02.2003
(73) Titulaire: Nexans, 75008 Paris (FR)
(72) Inventeur: Gouchi, Aziza, 91460 Marcoussis (FR); Durin-France, Agnès, 51100 Reims (FR); Ducatel, Francoise, 78830 Bonnelles (FR); Lopez-Cuestra, José-Marie, 30380 St Christol Les Ales (FR); Ferry, Laurent, 30190 Saint Dézéry (FR); Fomperie, Lionel, 78160 Auffargis (FR)
(74) Mandataire: Feray, Valérie

(56) Documents cités:
- EP-A- 0 393 813
- EP-A- 1 000 981
- US-A- 4 083 789

## Description

La présente invention concerne une composition à haute résistance à la propagation du feu, destinée en particulier, mais non exclusivement, à la fabrication de câbles électriques et/ou optiques de transport d'énergie et/ou de transmission d'informations devant pouvoir résister un certain temps aux fortes chaleurs d'un incendie.

L'ignifugation des matériaux utilisés notamment comme revêtements d'isolation et/ou de protection dans les câbles résistants à la propagation du feu est assurée de manière connue en incorporant un système retardateur de feu dans le polymère ou le copolymère de base du revêtement.

Les systèmes retardateurs de feu connus sont notamment à base de :
- dérivés halogénés
- hydroxydes métalliques, en particulier l'hydroxyde de magnésium Mg(OH)₂ et le trihydrate d'alumine Al(OH)₃
- silicone, stéarate de magnésium et carbonate de calcium CaCO₃, tel que décrit dans le document EP-0 774 487.

Actuellement, l'utilisation de dérivés halogénés tend à disparaître en raison des fumées toxiques et corrosives qu'ils dégagent lors de leur combustion.

**EP-0 393 813** divulgue une composition à haute résistance à la propagation du feu. Cette composition comprend un hydroxyde de magnésium, un double sel de carbonate de magnésium et de carbonate de calcium (par exemple, huntite), et un carbonate de magnésium.

**US-4 083 789** divulgue des compositions résistant au feu comprenant un acide phosphorique halogéné, et de manière optionnelle, un agent modifiant réactif (reactive modifier) tel que le carbonate de sodium, qui est un sel d'un métal du Groupe IA.

Avec les systèmes utilisant une combinaison de silicone, stéarate de magnésium et de carbonate de calcium, le sel de métal (stéarate de magnésium) migre vers la surface du matériau de base en cas d'incendie, et se décompose en donnant un résidu minéral venant renforcer la barrière minérale de silicate de calcium formée à la surface du matériau de base par le silicone et la charge de carbonate de calcium. Cependant, ces matériaux ne forment pas des cendres suffisamment compactes en cas d'incendie. De ce fait, les résidus sont friables et donc moins efficaces. La protection au feu reste limitée et ne répond donc pas à toutes les normes.

Enfin, les systèmes utilisant les hydroxydes métalliques, bien qu'ayant une résistance au feu acceptable, ne conviennent cependant pas à certaines applications. En effet, les hydroxydes métalliques nécessitent une utilisation en part importante (au moins 60% en poids) dans la composition dans laquelle ils sont incorporés, pour l'obtention d'une bonne tenue au feu. De ce fait, la viscosité des compositions contenant de tels hydroxydes comme additifs ignifugeants est accrue, ce qui diminue leur vitesse d'extrusion et par conséquent la vitesse de production des câbles les utilisant. La mise en forme est donc plus longue et les coûts de production plus élevés.

En outre, la forte concentration en hydroxyde métallique, et notamment en trihydrate d'alumine, dans les compositions destinées à être utilisées dans des câbles électriques, entraîne une dégradation des caractéristiques électriques de l'isolation, de sorte que de telles compositions ne sont utilisables que pour le revêtement de protection des câbles électriques et non pour le revêtement d'isolation de leurs conducteurs.

De plus, les fortes concentrations en hydroxydes métalliques entraînent une dégradation des propriétés mécaniques des compositions dans lesquelles ils sont incorporés.

Le but de la présente invention est donc de mettre au point une composition résistante à la propagation du feu susceptibles d'être utilisée en tant que gaine de protection de câbles sans pénaliser le processus de fabrication ni les caractéristiques mécaniques de ces câbles, et ayant un ILO supérieur à 35%, typiquement au moins égal à celui des compositions résistantes au feu à base d'hydroxydes métalliques, et ayant des propriétés de tenue au feu améliorées par rapport aux compositions de l'art antérieur.

La présente invention propose à cet effet une composition à haute résistance à la propagation du feu comprenant un polymère de base et un additif ignifugeant contenant un hydroxyde métallique,
**caractérisée en ce que** ledit additif ignifugeant contient en outre un composé à base d'un carbonate d'un métal du Groupe IA du tableau périodique des éléments revêtu d'un sel métallique, ledit composé constituant au moins 10% en masse dudit additif ignifugeant.

L'invention repose sur l'utilisation d'un matériau suivant un type de mécanisme ignifugeant connu, à savoir le mécanisme fondé sur l'utilisation d'hydroxydes métalliques, et sur l'incorporation dans ce matériau d'additifs non intrinsèquement ignifugeants mais entrant en synergie avec l'hydroxyde métallique et conduisant à l'amélioration des caractéristiques mécaniques du matériau final ainsi qu'à celle du procédé de fabrication de câbles comportant une gaine en un tel matériau. En outre, les propriétés de tenue au feu des matériaux ainsi obtenus sont également améliorées.

En effet, selon l'invention, au moins 10% de l'additif ignifugeant est constitué du composé à base de carbonate métallique, de sorte que la quantité d'hydroxyde métallique dans la composition est diminuée d'autant.

De ce fait, on limite les problèmes liés à l'utilisation d'hydroxydes métalliques, à savoir la dégradation des performances mécaniques de la composition ainsi que l'augmentation de sa viscosité.

Plus précisément, l'utilisation d'un fondant (carbonate métallique) permet de limiter l'augmentation de viscosité lors de la mise en oeuvre de la composition selon l'invention. Ainsi, ce dernier permet de réduire le couple mesuré lors du procédé de 14 à 22%.

Plus précisément, le carbonate métallique permet dans un premier temps d'agir en tant que fondant (et d'abaisser ainsi la viscosité de la composition), puis, après sa dégradation en cas d'incendie, de libérer à la fois un oxyde métallique renforçant ainsi le résidu, mais aussi de former un silicate de métal à partir de la charge minérale, améliorant la cohésion et la rigidité du résidu.

En outre, le traitement du carbonate métallique par un sel métallique permet de réduire l'hygroscopie du carbonate et améliore ainsi les conditions de mise en forme.

De manière très avantageuse, le composé contient en outre une charge minérale poreuse ou lamellaire.

Le système ternaire hydroxyde métallique/charge minérale/carbonate métallique traité par un sel métallique permet de renforcer la cohésion de la couche superficielle formée à la surface de la composition en cas d'incendie, en formant un résidu vitreux à l'extérieur mais poreux à l'intérieur, de sorte que la résistance de la composition à la propagation de la flamme est accrue.

Avantageusement, la charge minérale peut être choisie parmi la silice, le talc, le mica, le graphite, le gel de silice.

Avantageusement encore, le carbonate d'un métal du Groupe IA est le carbonate de potassium.

Selon un mode de réalisation de l'invention, le polymère de base est un copolymère d'éthylène et d'acétate de vinyle (EVA).

D'autres polymères de base possibles selon l'invention sont notamment le polyéthylène, le polypropylène et leurs copolymères, des silicones, des élastomères, des élastomères thermoplastiques. Parmi les copolymères d'éthylène on peut choisir les copolymères d'éthylène et d'acétate de vinyle, les copolymères d'éthylène et d'acide acrylique, les copolymères d'éthylène et de propylène, les copolymères d'éthylène et d'acrylate d'alkyle. On choisira de préférence un polymère thermoplastique et le copolymère d'éthylène et d'acétate de vinyle.

Un hydroxyde métallique préféré selon l'invention est l'hydroxyde de magnésium Mg(OH)₂. En effet, ce dernier libère lors de la dégradation de la composition environ un tiers de son poids en eau, ce qui permet un refroidissement local du milieu, puis il forme une couche céramisée protectrice d'oxyde métallique.

On pourra également utiliser comme hydroxyde métallique dans le cadre de la présente invention de l'alumine trihydratée Al(OH)₃.

D'autres caractéristiques et avantages de la présente invention apparaîtront dans la description qui va suivre d'exemples de compositions selon l'invention, donnés à titre illustratif et nullement limitatif.

L'invention concerne aussi bien des systèmes ignifugeants binaires que ternaires.

De manière générale, un système ternaire ignifugeant selon l'invention conduit à une résistance particulièrement élevée à la propagation de la flamme, car le mécanisme qu'il met en oeuvre conduit à la formation, à la surface du matériau à base de polymère, d'un ensemble complexe de couches particulièrement efficace pour résister au feu. Cet ensemble de couches comprend successivement, à partir de la surface du matériau de base, lorsque la charge est de la silice, l'hydroxyde métallique du Mg(OH)₂ et le carbonate du K₂CO₃ :
- une couche de charbonnement (c'est-à-dire résultant d'une transformation en charbon par combustion incomplète, également appelée carbonation) à base de Si-O-C
- une couche de silice microporeuse
- une enveloppe de silicate vitreux (Si-O-métal) entourant les couches précédentes
- une enveloppe céramique de K₂O et MgO au-dessus de l'enveloppe de silicate vitreuse.

En effet, la dégradation d'une composition selon l'invention sous l'effet de la flamme permet de former :
- un résidu minéral (silice microporeuse) résistant au feu et susceptible de contrôler la cinétique de décomposition par piégeage des gaz et de protéger le matériau de base de l'effet de la température élevée et de la poursuite de la combustion
- un charbonnement permettant d'assurer une bonne cohésion entre le matériau de base et le résidu minéral
- un revêtement céramique à la surface du résidu minéral pour le renforcer
- un réseau vitreux sous le revêtement céramique pour améliorer la cohésion et renforcer l'effet barrière.

Les exemples I à III ci-après donnent des compositions selon l'invention. L'exemple IV est un exemple comparatif d'une composition de l'art antérieur à base d'hydroxyde de magnésium Mg(OH)₂ uniquement comme additif ignifugeant. L'exemple I correspond à un système binaire selon l'invention, et les exemples II et III à des systèmes ternaires selon l'invention.

### Exemple I

Ethylène Vinyle Acétate : 40 % en poids
Hydroxyde de magnésium Mg(OH)₂ : 45% en poids
Carbonate de potassium K₂CO₃ traité au stéarate de magnésium : 15% en poids

### Exemple II

Ethylène Vinyle Acétate : 40 % en poids
Hydroxyde de magnésium Mg(OH)₂ : 45% en poids
Carbonate de potassium K₂CO₃ traité au stéarate de magnésium : 7,5% en poids
Talc : 7,5% en poids

### Exemple III

Ethylène Vinyle Acétate : 40 % en poids
Hydroxyde de magnésium Mg(OH)₂: 45% en poids
Carbonate de potassium K₂CO₃ traité au stéarate de magnésium : 12% en poids
Silice SiO₂ : 3% en poids

### Exemple IV

Ethylène Vinyle Acétate : 40 % en poids
Hydroxyde de magnésium Mg(OH)₂: 60% en poids

On a effectué sur les compositions des Exemples I à IV l'essai dit de « goutte ». Cet essai, applicable aux matériaux dits fusibles, c'est-à-dire présentant des phénomènes de fusion accompagnés de chute de gouttes lors d'un essai par rayonnement effectué au préalable, permet de mettre en évidence la présence de gouttelettes enflammées. Il est régi par la norme NFP 92-505.

Ce test consiste à soumettre un échantillon à un rayonnement calorifique constant et à provoquer, éventuellement, l'inflammation des gaz dégagés ainsi que la chute de gouttes enflammées ou non. La source de chaleur est constituée d'un épiradiateur. Ce dernier est placé au-dessus de l'échantillon à tester. Dès que celui-ci s'enflamme, il est écarté, puis replacé au-dessus de l'échantillon quand ce dernier s'éteint. Cette opération est renouvelée pendant une durée minimale de 5 minutes.

Ce test permet d'obtenir les éléments quantitatifs suivants concernant les échantillons testés :
- temps moyen de première ignition
- durée moyenne d'inflammation
- durée maximale d'inflammation
- temps cumulé d'inflammation
- nombre d'inflammations
- temps d'allumage.

Le tableau ci-après donne les valeurs quantitatives des différents paramètres mentionnés ci-dessus ainsi que l'Indice Limite d'Oxygène pour les compositions des Exemples I à IV.

| **Composition** | **I** | **II** | **III** | **IV** |
|---|---|---|---|---|
| **Temps d'ignition (s)** | 56 | 56 | 56 | 78,5 |
| **Durée moyenne d'inflammation (s)** | 7,21 | 7,68 | 7,60 | 9,98 |
| **Durée maximale d'inflammation (s)** | 10 | 10,75 | 11,25 | 16,25 |
| **Temps cumulé d'inflammation (s)** | 176,75 | 180,25 | 169 | 207 |
| **Nombre d'inflammations (s)** | 24,5 | 23,5 | 22,25 | 20,75 |
| **Temps d'allumage (s)** | 2,74 | 2,71 | 3,37 | 0,70 |
| **I.L.O. (%)** | 56,8 | 57 | 50 | 48 |

Ce tableau montre que le temps d'ignition est nettement abaissé dans les compositions selon l'invention par rapport à la composition comparative de l'Exemple IV.

En outre, les compositions selon l'invention améliorent très nettement les autres valeurs de l'essai par rapport à la composition comparative de l'Exemple IV.

Ainsi, les durées moyenne et maximale d'inflammation ainsi que le temps cumulé d'inflammation sont très largement réduits ce qui met en évidence le pouvoir retardateur de la flamme des compositions selon l'invention, ainsi que leur meilleure efficacité de tenue au feu par rapport à la composition de l'Exemple IV. Ceci est dû aux effets des synergies qui opèrent entre les composants des systèmes selon l'invention, mais également à l'amélioration de la cohésion de la structure du résidu final.

En outre, l'augmentation du nombre d'inflammations dans les compositions selon l'invention témoigne de l'aptitude de ces dernières à lutter contre l'inflammation, car elles s' « éteignent » rapidement.

Notamment, la baisse de la durée moyenne d'inflammation dans les compositions selon l'invention peut s'expliquer par la formation d'un solide réseau céramique K₂O- MgO qui isole les produits combustibles de l'oxygène de l'air ambiant.

Le temps d'allumage, c'est-à-dire le temps nécessaire pour réenflammer l'échantillon est également révélateur du fort pouvoir retardateur de feu des compositions selon l'invention. Ainsi, les compositions selon l'invention affichent une valeur nettement plus élevée que la composition comparative selon l'exemple IV, ce qui traduit une résistance à l'inflammation performante. Ce résultat s'explique, outre la formation d'un solide réseau céramique K₂O-MgO pour les compositions selon l'invention, par la formation, pour la composition selon l'exemple III, d'un réseau poreux, futur piège pour les gaz issus de la combustion, qui permet de limiter la combustion en appauvrissant l'atmosphère en gaz inflammables. Ce réseau est renforcé par un solide réseau vitreux K₂O-SiO₂ consolidé par MgO, mais aussi, par la formation d'une barrière de transfert de masse, c'est-à-dire une barrière physique filtrant les produits de la combustion, et isolante thermiquement, induite par les particules de talc pour la composition selon l'exemple II.

Enfin, on observe que les compositions selon l'invention on un I.L.O. supérieur (et même très largement supérieur pour les compositions I et II selon l'invention) à celui de la composition comparative de l'Exemple IV bien qu'elles contiennent moins d'agent ignifugeant Mg(OH)₂.

D'autre part, le test dit du « calorimètre à cône », qui consiste à brûler des échantillons à l'air ambiant tout en les soumettant à un rayonnement énergétique externe de puissance inférieure à 100 kW/m² et imposé par un chauffage radiant contrôlé en température, permet d'évaluer l'influence possible de l'échantillon testé sur la vitesse de dégagement de chaleur pendant son implication dans l'incendie en mesurant le flux calorifique dégagé (débit calorifique).

Ainsi, le test du calorimètre à cône pratiqué sur les échantillons selon l'invention permet de montrer que les compositions selon l'invention ont une énergie de décomposition faible : leur débit calorifique est inférieur de 20% à 45 % à celui de la composition selon l'exemple IV. En outre, la courbe de débit calorifique en fonction du temps pour toutes les compositions selon l'invention présente une croissance, un palier puis une décroissance, ce qui est caractéristique de la formation d'une couche protectrice efficace.

La composition selon l'exemple III permet en outre, quant à elle, un meilleur contrôle de la cinétique de dégradation du matériau grâce au réseau poreux de la silice, caractérisé par un étalement en température de la courbe de débit calorifique.

De manière générale, on constate que toutes les compositions selon l'invention limitent la cinétique de dégradation du matériau dans lequel elles sont introduites, par rapport à la composition comparative de l'exemple IV.

De plus, les compositions selon l'invention réduisent non seulement de 25 à 51% les émissions de fumée, mais la composition selon l'exemple II limite également le dégagement total de chaleur de 15% via le mécanisme d'effet barrière des particules de talc.

L'invention a donc permis de mettre au point des compositions à très haute résistance à la propagation du feu, ayant notamment une meilleure résistance à la propagation du feu que les compositions à base d'hydroxyde métallique seul comme additif ignifugeant, tout en évitant les problèmes de ces compositions, à savoir leur viscosité élevée et leurs caractéristiques mécaniques dégradées.

L'élaboration des mélanges selon l'invention peut être faite sur des installations courantes, par exemple les boudineuses à deux vis, et l'extrusion sous forme de gaine extérieure ou d'isolation électrique est par exemple possible au moyen d'une ligne d'extrusion classique.

Bien entendu, la présente invention n'est pas limitée aux exemples de mise en oeuvre qui viennent d'être décrits et porte dans sa généralité sur toutes les compositions envisageables à partir des indications générales fournies dans l'exposé de l'invention.

Notamment, les matériaux de base utilisables dans les compositions de l'invention peuvent être des homopolymères tels que par exemple les polyoléfines haute ou basse densité, notamment le polyéthylène, le polypropylène, le polybutylène téréphtalate, les polyamides, les polycarbonates, etc... Cette liste n'est pas limitative et de nombreux homopolymères bien connus notamment en câblerie peuvent être employés dans le cadre de la présente invention. Le matériau de base peut également être constitué d'un mélange de plusieurs homopolymères.

On peut ajouter au polymère de base utilisé dans les compositions selon l'invention des matériaux additionnels servant à améliorer la compatibilité du matériau de base avec les autres constituants de la composition.

Les matériaux de base selon l'invention peuvent être également des copolymères tels que ceux décrits par exemple dans le document EP-0 393 959, ou encore des élastomères thermoplastiques.

En outre, toutes les compositions selon l'invention peuvent contenir des agents classiques utilisés dans les compositions à haute résistance à la propagation du feu, notamment pour faciliter leur fabrication, prévenir le vieillissement et l'oxydation, etc... Ces agents sont bien connus de l'homme de l'art et ne seront donc pas décrits plus en détail.

## Revendications

1. Composition à haute résistance à la propagation du feu comprenant un polymère de base et un additif ignifugeant contenant un hydroxyde métallique,
**caractérisée en ce que** ledit additif ignifugeant contient en outre un composé à base d'un carbonate d'un métal du Groupe IA du tableau périodique des éléments revêtu d'un sel métallique, ledit composé constituant au moins 10% en masse dudit additif ignifugeant.

2. Composition selon la revendication 1 **caractérisée en ce que** ledit composé contient en outre une charge minérale poreuse ou lamellaire.

3. Composition selon la revendication 2 **caractérisée en ce que** ladite charge minérale est choisie parmi la silice et le talc.

4. Composition selon l'une des revendications 1 à 3 **caractérisée en ce que** ledit carbonate d'un métal du Groupe IA est le carbonate de potassium.

5. Composition selon l'une des revendications 1 à 5 **caractérisée en ce que** ledit polymère de base est un copolymère d'éthylène et d'acétate de vinyle.

6. Composition selon l'une des revendications 1 à 5 caractérisée ce que ledit hydroxyde métallique est de l'hydroxyde de magnésium Mg(OH)₂.

7. Câble électrique et/ou optique **caractérisé en ce qu'**il comprend une gaine en une composition selon l'une des revendications 1 à 6.

## Patentansprüche

1. Zusammensetzung mit hoher Flammwidrigkeit, welche ein Basispolymer und einen flammwidrigen Zusatz, der ein metallisches Hydroxid enthält, umfasst,
**dadurch gekennzeichnet, dass** der flammwidrige Zusatz weiterhin eine Zusammensetzung auf Basis eines Karbonats eines Metalls der Gruppe IA der Periodentafel der Elemente, überzogen mit einem metallischen Salz, enthält, wobei die Zusammensetzung wenigstens 10 Massenprozent des flammwidrigen Zusatzes ausmacht.

2. Zusammensetzung nach Anspruch 1, **dadurch gekennzeichnet, dass** die Zusammensetzung weiterhin einen porösen oder lamellaren mineralischen Füllstoff enthält.

3. Zusammensetzung nach Anspruch 2, **dadurch gekennzeichnet, dass** der mineralische Füllstoff aus Silika und Talk gewählt ist.

4. Zusammensetzung nach einem der Ansprüche 1 bis 3, **dadurch gekennzeichnet, dass** das Karbonat eines Metalls der Gruppe IA Kaliumkarbonat ist.

5. Zusammensetzung nach einem der Ansprüche 1 bis 5, **dadurch gekennzeichnet, dass** das Basispolymer ein Kopolymer von Ethylen und Vinylacetat ist.

6. Zusammensetzung nach einem der Ansprüche 1 bis 5, **dadurch gekennzeichnet, dass** das metallische Hydroxid Magnesiumhydroxid Mg(OH)₂ ist.

7. Elektrisches und/oder optisches Kabel, **dadurch gekennzeichnet, dass** es eine Hülle und eine Zusammensetzung nach einem der Ansprüche 1 bis 6 umfasst.

## Claims

1. Composition with high flame resistance comprising a basic polymer and a fire-retardant additive containing a metal hydroxide,
**characterized in that** said fire-retardant additive also includes a compound containing a carbonate of a metal from Group 1A in the periodical table of elements coated with a metal salt, said compound forming at least 10 % by weight of said fire-retardant additive.

2. Composition as in claim 1, **characterized in that** said compound also contains a porous or lamellar mineral filler.

3. Composition as in claim 2, **characterized in that** said mineral filler is chosen from among silica and talc.

4. Composition as in any of claims 1 to 3, **characterized in that** said carbonate of a Group 1A metal is potassium carbonate.

5. Composition as in any of claims 1 to 4 **characterized in that** said basic polymer is a copolymer of ethylene and vinyl acetate.

6. Composition as in any of claims 1 to 5, **characterized in that** said metal hydroxide is magnesium hydroxide Mg(OH)₂.

7. Electric and/or optic cable **characterized in that** it comprises a sheath having a composition of any of claims 1 to 6.
